# EUROPEAN PATENT SPECIFICATION

(11) **EP 2 563 668 B1**
(45) Date of publication and mention of the grant of the patent: **09.04.2014**
(21) Application number: 11716904.5
(22) Date of filing: 27.04.2011
(51) Int. Cl.: B64F 1/00, B64F 1/20, F21S 8/00, F21V 29/00, F21V 19/02, F21V 23/02, F21V 25/00, B64C 27/82, F21W 111/06, F21Y 101/02

(54) **ELEVATED AIRFIELD LED LIGHTING DEVICE**
ERHÖHTE FLUGFELD-LED-BELEUCHTUNGSVORRICHTUNG
DISPOSITIF D'ECLAIRAGE A DEL DE CHAMP D'AVIATION

(30) Priority: 28.04.2010 EP 10161360
(43) Date of publication of application: 06.03.2013
(73) Proprietor: ADB BVBA, 1930 Zaventem (BE)
(72) Inventor: DE BOECK, Peter, B-1930 Zaventem (BE); OP DE BEECK, Stijn, B-1930 Zaventem (BE); TRÉMOUROUX, Pierre, B-1930 Zaventem (BE)
(74) Representative: Pronovem
(86) International application number: PCT/EP2011/056631
(87) International publication number: WO 2011/134984

(56) References cited:
- WO-A1-02/066889
- WO-A1-2009/103246
- US-A1- 2002 136 027
- US-A1- 2006 050 507
- US-A1- 2008 002 410

## Description

### Field of the Invention

The present invention relates to elevated light beacons for airfields, based on LED light sources. In particular, the present invention relates to high intensity airfield lights, such as airfield runway edge, end, threshold and approach lights.

### State of the Art

LED light sources are increasingly being used in airfield lights. The advantages of LED over incandescent or halogen light sources are well known. It is also known in the art that in spite of the high energy efficiency of LEDs, a serious amount of heat is produced, both in the LEDs and in their power supply and control system. Ensuring a long lifetime of the LED light source requires that the temperature of the light emitting junctions of the LED be kept below a critical value, which is much lower than for incandescent lamps (400°K vs 3000°K). Therefore, produced heat must be efficiently drained away.

In US 2008/002410 an omni directional beacon light is disclosed utilising LEDs, comprising a base plate acting as a first heat sink and LED arrays arranged on supports stacked concentrically one onto another. Thermally conductive elements, referred to as heat pipes, couple the LED arrays to a second heat sink arranged on top of the beacon light. The second heat sink can be formed of a plurality of cooling fins for dissipating heat by natural convection.

A disadvantage of such a beacon light is that the heat produced by the bottommost LED arrays must travel upwards along the height of the light before it is dissipated by the second heat sink. As a result, the uppermost LED arrays are exposed to heat produced from the lowermost LED arrays and their power supply.

WO 2009/103246, which is considered the closest prior art, discloses in one embodiment a LED obstruction light comprising at least one heat sink dedicated to dissipate heat generated from the LEDs and at least one heat sink dedicated to dissipate heat generated from the power supply, the two heat dissipation paths being separate. The power supply is provided in a metal housing which acts as its heat sink and which sits on a connector ring for connecting the light to a base fixture. On top of the power supply are provided a concavely curved reflective surface and downward facing LEDs so that light is emitted sideways. A heat insulator is provided between power supply and reflective surface. Heat generated by the LEDs is dissipated by a heat sink provided on top of the LEDs.

The same document discloses in another embodiment upward facing LEDs with the heat sink provided underneath. In this embodiment, the heat sink has a central opening for receiving a bottom member in which the power supply is housed. The bottom member comprises vertical ridges which interlock with vertical grooves provided internally in the opening of the heat sink. Hence, in the latter embodiment, LEDs and power supply share a same heat sink, which is provided in a middle portion of the obstruction light.

With regard to the above documents, it is to be noticed that jet blast resistance is generally not an issue for obstruction lights. Therefore, the lights of US 2008/002410 and of the first abovementioned embodiment of WO 2009/103246 have the disadvantage that the second heat sink enlarges the area exposed to wind blasts. Such designs cannot therefore be applied to airfield runway edge and approach lights without making the lights vulnerable to jet blasts. The front area is somewhat reduced in the abovementioned second embodiment of WO 2009/103246, though at the expense of intermingling heat dissipation of the power supply and the LEDs, which can reduce LED lifetime as indicated above.

Document WO 02/066889 discloses a LED beacon lamp including a plurality of LEDs mounted on modules, arranged around a telescopic tube and secured to a base. The modules are covered by a transparent lamp cover. Each module includes a LED assembly mounted on an inner heat sink bracket, which includes convection fins. Both the base and the outer cover include screen portions allowing air flow within the lamp. LED driving and control circuitry is housed in an electrical housing which connects to an existing controller for retrofitting onto existing lamp sites.

The above specified document does not disclose where the electrical housing is to be mounted, even though it may be deduced from the figures that the electrical housing is configured as a box to be installed into existing controller enclosures. Not only does this appear to be not always possible, but where the controller is mounted at an elevated position, it contributes to increase the area exposed to wind blasts.

In the particular case of airfield runway edge and approach lights, there are additional problems, such as combining different criteria specified by regulatory authorities, such as ICAO, FAA or IEC; by the end users of the lights, which may specify additional operational criteria, for environmental requirements, including climatic, jet blast and electromagnetic shielding; and by the manufacturers of the lights and of the light sources.

Specifically in the case of elevated high intensity airfield lights, which generate significant amounts of heat, there exists a problem of on the one hand providing a surface for thermal dissipation which is large enough, and on the other hand providing a jet blast exposed area which is small enough, such that the lighting device can withstand the ICAO frangibility criteria (exposure to a jet blast at 483 km/h). This problem will become even more stringent with the expanded use of larger aircrafts, such as the Airbus A380.

### Aims of the Invention

The present invention therefore aims at providing an elevated airfield lighting device that overcomes the drawbacks of the prior art.

In particular, it is an aim of the invention to provide an elevated airfield lighting device based on LED technology, which maximizes the ratio of the external surface for thermal dissipation to the sectional area exposed to jet blast forces.

It is an aim of the invention to provide an elevated airfield lighting device which eases maintenance and provides for easy mounting and adjustment.

### Summary of the Invention

According to aspects of the invention, there is therefore provided an elevated airfield lighting device, as set out in the appended claims. The elevated airfield lighting device comprises a main body and at least one light unit. The main body is securable to a support, enabling the main body to be fixed at an elevated position from ground. The light unit comprises at least one LED.

The main body encloses an electronic circuit for powering and driving the LED. It comprises a first heat sink thermally coupled to the electronic circuit. The light unit comprises a second heat sink for dissipating heat generated by the LED.

According to the invention, the light unit is formed as a separate (distinct) body from the main body.

The light unit is (removably) attachable to the main body. The light unit and the main body are so formed, that when the light unit is attached to the main body, the second heat sink is interposed between the main body and the light unit and ambient air can pass in between the main body and the light unit so that the second heat sink can dissipate heat to the ambient air by natural convection.

According to the invention, the light unit comprises a front and a back. The front is arranged for transmitting light from the LED. Hence, the front is arranged cross an optical path of light emitted from the LED. The back comprises a rear surface and at least part of the second heat sink is provided at the rear surface. When the light unit is attached to the main body, the rear surface, and hence at least part of the second heat sink, is interposed between the front of the light unit and the main body.

A (partly open) fluid passage for ambient air is hence provided/created in between the main body and the light unit, so that the heat dissipated by the second heat sink can be drained to the ambient air passing through the fluid passage by natural convection.

By providing the light unit separately from the driving electronic circuit, and each with its own heat sink, it is more efficient to control the temperature within the light unit, so as to extend the LED lifetime. Furthermore, by providing the heat sink at the back of the light unit, interposed between the front of the light unit and the main body, a more compact design is obtained, while at the same time the surface for heat transfer can be maximized. It follows that the ratio of heat transfer surface and sectional area exposed to jet blast can be optimized.

Lighting devices according to the invention are preferably arranged to be used as an airfield runway edge light and/or an airfield runway approach light. They can also be used as airfield runway end or threshold lights. Such lights require high luminous intensities, for which the structure of the present lighting devices is particularly appropriate.

Preferably, the light unit is removably attachable to an external surface of the main body.

Preferably, when attached, the rear surface of the light unit and the main body are facing each other. In other words, the rear surface and the external surface of the main body are facing each other.

Preferably, the main body comprises an external cover. The external cover is arranged at the external surface. The external cover preferably comprises a top face and at least one front face. The light unit is preferably attachable to the front face.

Preferably, the light unit and the main body are so formed that, when the light unit is attached to the main body, the second heat sink does not contribute to the jet blast exposed area of the lighting device.

The first and second heat sinks can be thermally coupled to each other when in use. Alternatively, the second heat sink is thermally isolated from the first heat sink when the light unit is attached to the main body. As a result, a total thermal decoupling is obtained between the LED and its driving circuit, so that heat generated by the driving electronics can not affect the LED's temperature and the LED's thermal household can be managed more easily. Consequently, both subassemblies, viz. light unit and power supply, can both be optimized for their operating temperatures.

Preferably, the second heat sink comprises fins and/or pins arranged at the rear surface. The fins and/or pins maximize the surface for thermal dissipation. By providing them at the rear surface, they do not contribute to increasing the area exposed to jet blast and also do not hinder light signals emitted by the lighting device.

Preferably, the second heat sink comprises fins at the rear surface, which have substantially upright oriented ridges and valleys. The fins are interrupted by indentations such that air is allowed to by-pass the fins. Air can hence flow through the indentations sideways into the valleys.

Preferably, the outer surface of the main body is formed by a housing (a cover) at least in part made of a thermally conductive material so as to constitute at least part of the first heat sink. Since the light sources are isolated from the main body, there is no need for a translucent housing of the main body any more and the main body can now be designed for optimal heat transfer to the ambient air.

Preferably, the electronic circuit is embedded in thermally conductive potting material. The potting material is preferably thermally coupled to the first heat sink, such as the housing of the main body. The potting material can increase the heat transfer from the electronic circuit to the first heat sink.

Preferably, the housing of the main body is at least in part made of an electrically conductive material so arranged as to shield electromagnetic radiation generated by the electronic circuit when in use. Preferably, the main body has a cover at least in part made of the electrically conductive material. The structure of lighting devices according to the invention allows the main body's housing to be constructed as a Faraday cage. As a result, electromagnetic shielding is effected easier compared to the prior art. This is an important aspect in LED-based lights, since LEDs need electronic driver circuits. There is therefore a systematic emission of electromagnetic field by LED powering devices. In order not to disturb the electronic systems provided on aircrafts, or electromagnetic guidance signals emitted from ground guidance equipment, a good electromagnetic shielding is required to comply to IEC / EN 61000 or other applicable aeronautical standard. At the same time however, the lighting devices must be able to withstand heavy disturbing electromagnetic waves, such as those emitted by radar antennas. Since the electromagnetic emittance level is proportional to the controlled electrical power, the level of shielding is more important for high intensity LED lights, such as airfield runway edge or approach lights, compared to low intensity LED lights, such as taxiway edge lights or obstruction lights.

Preferably, the main body has a base shaped so as to have a major and a minor axis of different length (in projection on a horizontal plane). Examples are an essentially rectangular or elliptical base. As a result, the main body can be made elongated, preferably in the direction of the jet blast, so that the surface, both for heat dissipation and for visual appearance can be increased. By providing the main body with for example a yellow colour, such as in accordance with FAA AC circular 150/5345-46, paragraph 3.10, the lighting device can be used as a visual marker to the pilot when the lights are not energized.

Preferably, the light unit comprises an optical beam shaping element arranged in an optical path of the LED, enabling to achieve a predetermined light intensity distribution. The beam shaping element can comprise refractive and/or reflective means. Since the required intensity distribution can vary by light type (edge light or approach light) and can be defined by regional standards, it suffices to replace the optical beam shaping element only. Hence, production and stock and maintenance logistics can be made easier resulting in cost reduction.

Such optical beam shaping elements can be miniaturised and it is possible to provide each LED with its proper, specific optical beam shaping element. This obviates the need for large, complex lenses. The optical elements are advantageously integrated in the front cover of the light unit. Also, by only replacing the optical beam shaping elements - e.g. replacing the light unit's front cover - different light types can be provided.

Preferably, the lighting device comprises means to adjust the position of the light unit relative to the main body. At least the azimuth angle is preferably adjustable. Depending on the application, international and regional standards, such as issued by the ICAO or FAA, require a specific intensity distribution for the light beam. Similar intensity distributions can be applied to several applications, which are only differentiated by the elevation or azimuth (toe-in) angular direction. By making the light unit adjustable relative to the main body, such direction can be easily adjusted, in function of the application and the light location on the airfield.

In addition, the adjustment of the elevation/azimuth can be pre-set off-field, which allows installation and replacement to be carried out more quickly, so that valuable time can be saved.

Preferably, the means to adjust the position of the light unit relative to the main body comprise a screw for attaching the light unit to the main body and a sleeve formed in the light unit and having dimensions to allow adjustment of the light unit relative to the screw. Preferably, the main body has an outer surface which is curved in azimuth direction where the light unit is attached to the main body.

Preferably, the main body comprises reference marks configured to engage with an alignment tool for aligning the lighting device to an external reference, such that when the alignment tool is adjusted, the main body is adjusted in the same amount. Preferably, the reference marks are provided in the form of recesses and/or projections configured to engage with the alignment tool.

Preferably, the electrical connection between the main body and the support is provided by a connector plug and socket. Preferably, the main body comprises releasable means for mechanically connecting the main body to the support. By so doing, securing the lighting device to the support is made easier. As a result, in case of defects, the entire lighting device can be replaced very quickly and without needing special tools nor field adjustment for both the electrical and the mechanical connection.

Preferably, the lighting device comprises at least two light units arranged at opposite sides of the main body.

According to another aspect of the invention not claimed, there is provided a light unit as described in any one preceding paragraph, which is removably attachable to a main body of an elevated airfield lighting device, both mechanically and electrically to receive power and control for the LEDs.

### Brief Description of the Drawings

Figure 1 schematically represents an elevated lighting device according to the invention.
Figure 2 represents the front cover of a light unit.
Figure 3 represents top and front views of a lighting device according to the invention, with two different azimuth orientations (figure 3A and figure 3B) of the light unit relative to the main body.
Figure 4 represents the back view of a light unit according to the invention, comprising fins interrupted by indentations to allow side wind to get through.
Figure 5 represents a cover of the main body provided with reference marks and an alignment tool for aligning the main body relative to an external reference.

### Detailed Description of the Invention

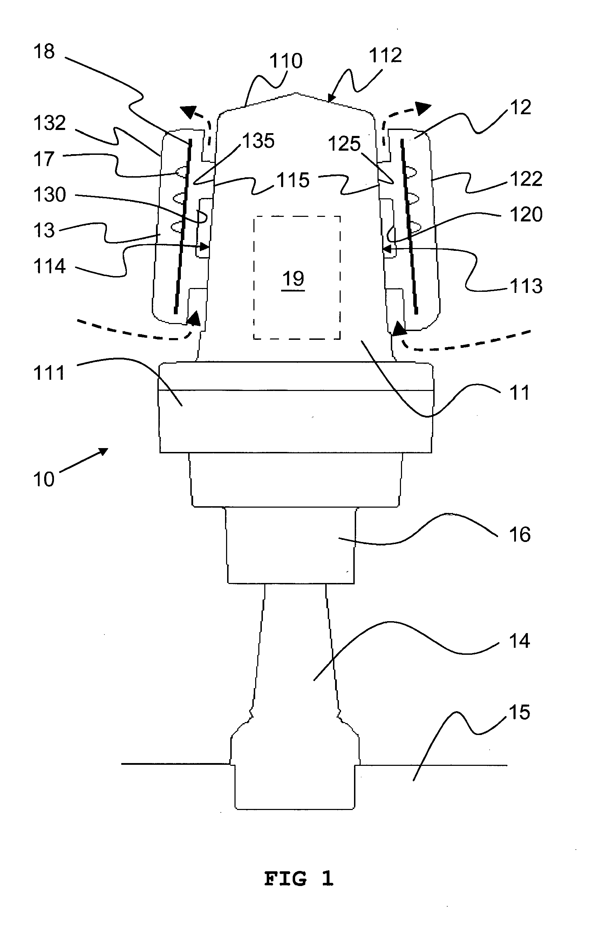

Figure 1 represents a lighting device 10 according to an example embodiment of the invention, comprising a main body 11 and light units 12 and 13. The lighting device 10 in figure 1 is presented as an elevated runway edge light.

The main body 11 is removably attached to a support 14 through a quick-release coupling 16. As a result, the main body 11 can be quickly and easily attached to and removed from the support 14, without the need of any tools. The support 14 can be a stand projecting from ground level and fixed to the ground 15. Support 14 hence enables to mount the lighting device 10 at an elevated position above ground level. Support 14 preferably comprises a point of weakness (not shown) in accordance with the frangibility requirements for elevated airfield lights.

The main body 11 encloses electronic circuitry 19 for powering and driving one or more LEDs. It can enclose additional circuitry as required by international or regional aviation standards, such as an overvoltage protection against lightning.

The main body 11 can have a circular base 111, but elliptical or rectangular bases, having, in 2D projection, one larger and one smaller axis, are preferred, since they allow to increase the main body's outer surface while not affecting the sectional area relevant for jet blast resistance. This increases the thermal dissipation and improves visual appearance of the lighting device 10 to the pilot, even at short distances.

The main body comprises an external cover 110, which rests on a base 111 of the main body. The cover is defined by a top face 112 arranged at an elevated position with regard to the base 111, and by one or more front faces 113, 114 extending between the base 111 and the top face 112. The front faces 113, 114 hence can stand substantially upright. The cover 110 can be dome-shaped.

The LED power and driver electronic circuitry enclosed in the main body 11 generates heat, which needs to be drawn from the body in order to limit the temperature increase and avoid electronic component failure.

To solve this problem, the main body 11 is provided with a first preferably passive heat sink. Preferably, the housing (cover) 110 of the main body 11 acts as the first heat sink. The cover 110 is therefore preferably made of a thermally conductive material, such as a metal, e.g. aluminium, or a metallic alloy. The cover 110 can be made of a (thermally conducting) polymeric material, possibly with the addition of metallic powder. By thermally coupling the electronic circuitry to the heat sink, heat can be dissipated to the ambient by convection and/or radiation.

For a most efficient heat dissipation, the ratio of the surface of the cover 110 to the cross-sectional area of the main body (cover 110) is as high as possible. This can be obtained by providing the main body with a rectangular or elliptical base 111 as indicated above. In vertical cross-section, as represented in figure 1, the cover 110 has advantageously a trapezoidal (frusto-conical) shape.

The electronic circuitry can additionally be embedded in a thermally conductive potting material, such as an epoxy, which possibly fills the inside of the cover 110. The potting material can improve thermal conduction/diffusion towards the heat sink (cover 110).

The base 111 of the main body can be used, additionally or as an alternative, as a heat sink.

The LED power and driver electronic circuitry enclosed in the main body 11 also generates an electromagnetic field (radiation), which can interfere with on-board or ground-based electronic non visual surveillance or guidance equipments, such as ILS, MLS, Radars,... or with electromagnetic signals.

To solve this problem, the main body 11 can additionally be made to shield electromagnetic fields emitted from the electronic circuitry. This can be done by forming the main body 11 as a Faraday cage. The electromagnetic shielding preferably complies with the levels defined in IEC standard EN 61000, and possibly other navigational standards. The material of the cover 110 is possibly so selected as to be also electrically conductive, such as aluminium. Alternatively, a mesh or grid-like structure of an electrically conductive material can be provided underneath the cover 110.

In addition to the quick-release coupling 16, a quick-release electrical connection between the main body 11 and the support 14 can be provided as well, such as through a plug and socket. As a result, by releasing the mechanical connection 16, the main body can be automatically electrically disconnected from electrical power mains as well. This eases installation and repair.

The main body has preferably a height of at least 100 mm, which ensures a good visibility to the pilot. It shall preferably be limited in height to less than 350mm in order not to interfere with aircraft engine pods.

In accordance with an aspect of the present invention, the LEDs are not part of the main body 11, but of one or more light units 12, 13, which are provided separate from the main body 11. The light units are preferably releasably fastened to an external surface of the main body 11, e.g. by screws. They are also preferably provided with a quick-release or other standard electrical connection to the main body.

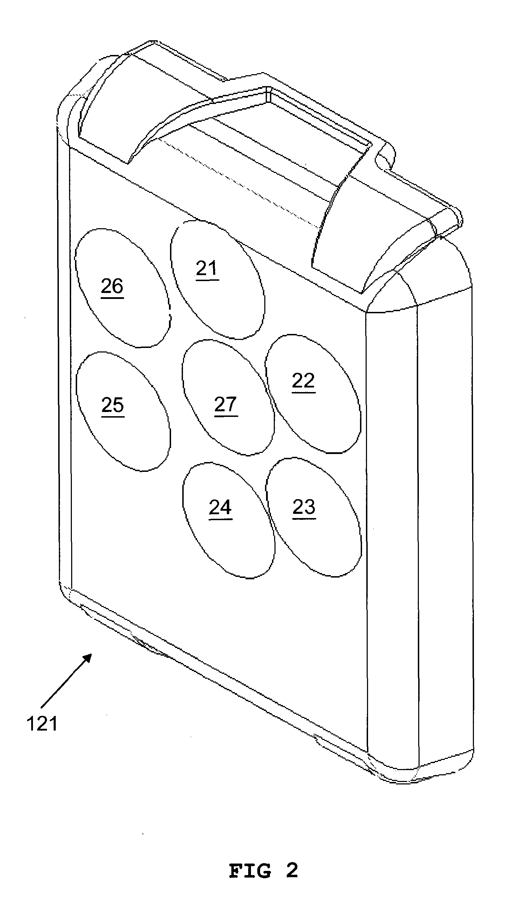

Each light unit 12 encloses one or more LEDs 17. The LEDs 17 can be protected by a front cover 121 of the light unit 12, an example of which is shown in figure 2. As will be explained below, for each LED 17, an optical beam shaping element 21-27 can be integrated in the front cover 121. All the LEDs 17 are powered and driven by the electronic circuitry enclosed in the main body 11. The light units therefore preferably do not enclose electronic circuitry which can emit undesired (interfering) non visual electromagnetic radiation.

The front cover 121 defines a front surface 122, 132 of the light units, from where light is emitted to the exterior, i.e. the front surface is arranged across an optical path of light emitted by the LEDs. Light is emitted in a bundle and according to a predetermined light intensity distribution pattern, which advantageously includes emission in a direction perpendicular to the front surface 122, 132.

The LEDs 17 are mounted on a printed circuit board (PCB) 18, which is advantageously arranged substantially parallel to the front surface 122, 132. Hence, considering a direction perpendicular to the front surface 122, 132, LEDs 17 can be seen to be interposed between PCB 18 and front surface 122, 132 so as to emit towards the front surface 122, 132. Advantageously, a PCB having a top face of a colour similar to the colour of the light emitted from the light unit is used for increased day light visibility.

The light units 12, 13 further comprise at their back a rear surface 120, 130, arranged at an opposite side of the light unit relative to the front surfaces 122, 132. As can be seen from figure 1, PCB 18 is enclosed between the front surface 122, 132 and the rear surface 120, 130.

The light units 12, 13 are removably attachable to the main body. Light units 12, 13 therefore are provided at their back with a surface of contact 125, 135 fitting onto a corresponding seat 115 of the main body 11, which can be provided on the front faces 113, 114 of the cover 110. Since the light units are attachable to the main body from their back sides, when attached, the rear surfaces 120, 130 of the light units 12, 13 and the front faces 113, 114 of the cover 110 (main body) are facing one another.

An advantage of separating the electronic processing and the light generation is that the electromagnetic shielding is not an issue for the light units 12, 13, but only for the main body 11. Furthermore, the main body 11 does not need to be provided with apertures for the light to pass, so that electromagnetic shielding can be optimized.

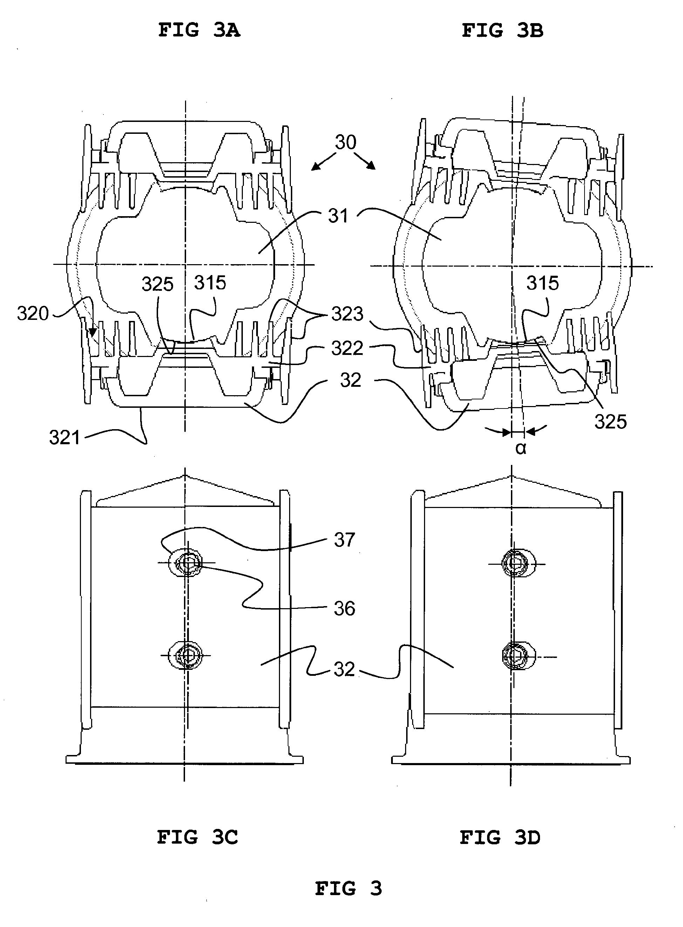

The generation of light by each LED 17 is necessarily associated with heat production, which needs to be drained in order to keep the temperature within the LED junction below a critical value. Otherwise, the lifetime of the LED shortens significantly. Therefore, as is shown in the top view representation of figures 3 A-B, each light unit 32 is provided with a second heat sink 322, which is preferably a passive heat sink. All LEDs 17 within a single light unit 12, 13, 32 are preferably thermally coupled to the second heat sink. The LEDs can for example be provided on a metal core printed circuit board thermally coupled to a heat dissipating external surface 322 of the light unit 32.

In order not to hinder the light beams generated by LEDs 17, the second heat sink is preferably provided at the back 120, 130 of the light unit 12, 13. In addition, or alternatively, it can be provided laterally around the light unit 12, 13.

For the second heat sink to perform its function, the light units 12, 13 are preferably arranged at a distance from the main body 11, at least for the functional area of the second heat sink. By so doing, air is allowed to pass along the second heat sink, and between the main body (first heat sink) and the second heat sink so that heat can be dissipated by natural convection as shown by the dashed arrowed lines in figure 1.

For most efficient heat dissipation, the area available for heat transfer of the second heat sink is increased by any suitable means. Preferably, fins and/or pins are provided at the back of and/or laterally around the light unit 12. This is shown in the top view representation of the lighting device 30 in figures 3 A-B. The light unit 32 comprises a second heat sink 322 provided with fins 323 at its back 320. Light unit 32 is provided with a cover 321 at the front. A surface of contact 325 at the back 320 of the light unit 32 sits in a corresponding seat 315 of the main body 31.

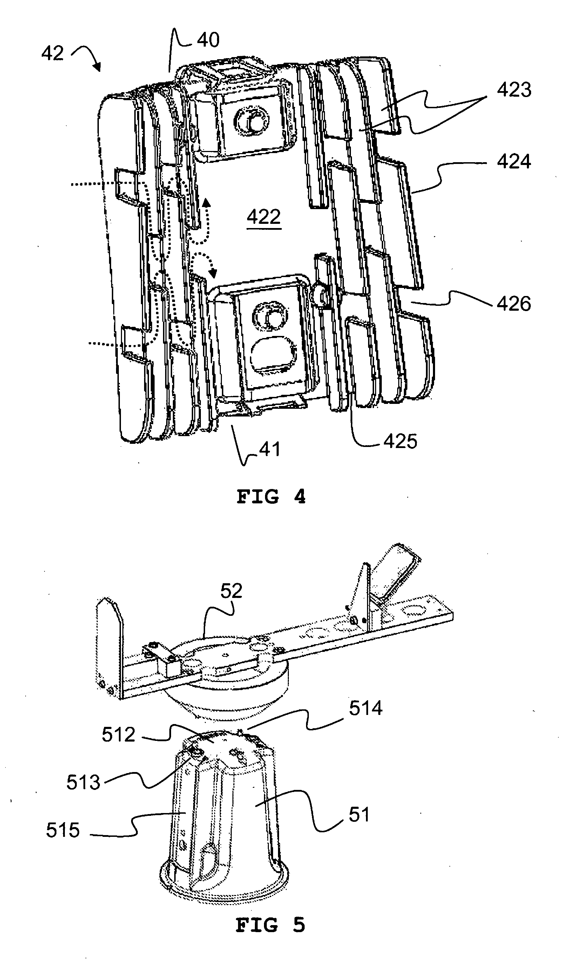

Figure 4 represents a back view of an example embodiment of a light unit 42, clearly showing the second heat sink 422. Heat sink 422 comprises fins 423 which are oriented substantially vertically (upright), such that ridges 424 of fins 423 and valleys 425 in between the fins run in a direction from top 40 to bottom 41 (upright).

As an advantage, the fins 423 are interrupted by indentations 426, which allow air to enter the valleys 425 sideways, such as in case of side wind. The air can therefore be guided in a way as shown by the dotted arrowed line in figure 4. The indentations 426 increase cooling performance.

A similar effect can be obtained when pins are used. The pins can have an elongated shape in top-bottom direction.

A further advantage of separating the electronic processing and the light generation hence is that a thermal decoupling can be obtained between the two, enabling the thermal household to be optimized separately and more efficiently.

Depending on the specific configuration of the lighting device, the first and second heat sinks can be thermally coupled. For example, in case the power and driver electronics in the main body are very energy efficient, the first heat sink can contribute to dissipate heat generated by the LEDs, especially for light units containing a large number of LEDs. Alternatively, for example in case light units containing a small number of LEDs are used, the second heat sink 322 can contribute to dissipate heat from the power and driver electronics.

Alternatively, the first and the second heat sinks can be thermally isolated. This allows each assembly to be designed separately and run at its optimum operating temperature.

A still further advantage of lighting devices according to aspects of the invention is that a more compact design can be achieved as regards jet blast resistance, while allowing a large surface area for heat dissipation, which is "hidden", i.e. it does not contribute to the jet blast exposed area.

Since each LED can be considered as a point source, the design of optical components can be miniaturised and each LED can be provided with its own specific optical component. As an advantage over classical light sources, this allows to tailor the intensity distribution for each LED separately, such that the integration of all intensity distributions forms the required light beam (signal). For example, a first LED may comprise or be associated with a first collimator emitting a first intensity distribution. A second LED may comprise or be associated with a second collimator emitting a second intensity distribution. The same can be done for the remaining LEDs, all emitting a specific light intensity distribution. The integration of all these light intensity distributions can form the desired light intensity pattern.

Such optical components are typically refractive components, such as lenses and collimators. These can be integrated in the LED housing, and/or, as shown in figure 2, optical components 21-27 can be integrated in the light unit's external cover 121 so as to reduce the number of parts. It suffices to just design different covers 121 so as to comply with different standards, light types, etc. Alternatively, such optical components can be interposed between the LEDs 17 and the front cover 121.

Referring again to figure 1, the main body 11 can support one, or a plurality of light units 12, 13. Preferably, it supports them in a symmetrical way, such as two light units 12, 13 arranged at opposite sides of the main body 11.

The lighting device 10 can be used as a uni-, bi-, or omni-directional light.

A further advantage of having the light unit 12 separated from the main body 11, is that adjustment means 36, 37 for adjusting the orientation of the light unit 32 relative to the main body 31 can be provided, as shown in figure 3.

Figures 3 C-D show a light unit 32, attached to the main body 31 by a screw 36. The screw 36 fits a sleeve 37 in the light unit, arranged for adjusting the azimuth orientation α of the light unit (light beam), also referred to as toe-in. The light unit 32 is represented in figure 3 in two different toe-in positions (see figures 3A and 3C versus figures 3B and 3D).

The main body can be advantageously provided with a scale indicating the azimuth angle, in order to avoid errors in setting the toe-in.

Similar adjustment means can be provided for the elevational orientation of the light unit relative to the main body (i.e. perpendicular to azimuth).

As a result, adjustment of the orientation can be performed quickly and easily, without having to provide costly additional optical components. The adjustment can be carried out off-field, prior to installation, or during maintenance and/or replacement. In both cases, the time needed is reduced compared to existing airfield lighting devices.

The maintenance of airfield lights is a critical task with regard to airport traffic control, as the runways and taxiways require closure to allow the access of technicians. Therefore, lighting devices 10, 30 with main body 11, 31 respectively and light units 12 and 13, and 32 respectively can be provided as a single replacement kit. Since optical alignment can be effected beforehand, the lighting devices of the invention can be replaced very quickly.

Advantageously, a connector is provided in the main body for removable connection to an external computer in order to be able to perform software updates of a driving/control program for the LEDs 17. The connector gives easy access for software updates, since only the main body needs to be opened and closed, which can be done through a quick-release coupling as indicated above, and without the need for re-alignment of the lighting device.

Advantageously, the main body comprises reference marks for aligning the main body 11 relative to an external reference before fastening the main body to the support 14. Referring to figure 5, such reference marks can be formed of a couple of recesses or holes 513, pins 514, or a combination to allow an alignment tool 52 to be aligned with (a predetermined reference of) the main body. The reference marks 513, 514 engage with the alignment tool 52 such that when the alignment tool 52 is adjusted to align it to an external reference, in particular an alignment in azimuth direction, the main body is adjusted in the same amount.

The reference marks are advantageously provided on the top face 512 of the main body's cover 51. In figure 5, reference 515 indicates the seat for a light unit.

A further advantage of lighting devices of the invention is that, since the main body and the light units can be designed separately, the main body can be so shaped as to increase its visibility to the pilot, in particular when the lights are turned off.

The surface finish of the main body is preferably of yellow colour in accordance with national/regional standards.

Abbreviations :
LED: Light Emitting Diode
ICAO: International Civil Aviation Organisation
IEC: International Electrotechnical Commission
FAA: US Federal Aviation Administration
ILS: Instrument Landing System
MLS: Microwave Landing System

## Claims

1. Elevated airfield lighting device (10, 30), comprising a main body (11, 31) securable to a support (14) enabling the main body to be fixed at an elevated position from ground (15), and at least one light unit (12, 13, 32) comprising at least one LED (17), wherein the main body (11) encloses an electronic circuit for powering and driving the LED and comprises a first heat sink thermally coupled to the electronic circuit, and wherein the light unit (12, 13, 32) comprises a second heat sink (322, 422) for dissipating heat generated by the LED, whereby the light unit is formed as a separate body from the main body (11, 31) and is attachable to the main body (11, 31, **characterised in that**:
- the light unit (12, 13, 32) comprises a front (122, 132) arranged for transmitting light from the LED (17), and a back comprising a rear surface (120, 130) at which the second heat sink is provided, and
- when the light unit (12, 13, 32) is attached to the main body, the rear surface, (120, 130) is interposed between the front (122, 132) and the main body (11, 31) and a fluid passage is formed in between the main body (11, 31) and the light unit (12, 13, 32) where ambient air can pass so that the second heat sink (322, 422) can dissipate heat to the ambient air by natural convection.

2. Elevated airfield lighting device (10, 30) of claim 1, wherein the light unit (12, 13, 32) is removably attachable to an external surface of the main body.

3. Elevated airfield lighting device (10, 30) of any one preceding claim, wherein the main body (11, 31) comprises an external cover (110), the cover (110) comprising a top face (112) and at least one front face (113, 114), and wherein the light unit (12, 13) is attachable to the front face (113, 114) .

4. Elevated airfield lighting device (10, 30) of any one preceding claim, wherein the second heat sink (322, 422) is arranged such that it does not contribute to the jet blast exposed area of the lighting device.

5. Elevated airfield lighting device of any one preceding claim, wherein the second heat sink (322, 422) is thermally isolated from the first heat sink when the light unit (12, 13, 32) is attached to the main body (11, 31).

6. Elevated airfield lighting device (30) of any one preceding claim, wherein the second heat sink (322, 422) comprises fins (323, 423) and/or pins for increasing the surface for heat transfer arranged at the rear surface (120, 130).

7. Elevated airfield lighting device (10, 30) of any one preceding claim, wherein the main body (11, 31) has an outer surface being formed by a cover (110) at least in part made of a thermally conductive material so as to constitute at least part of the first heat sink.

8. Elevated airfield lighting device of claim 7, wherein the electronic circuit is embedded in thermally conductive potting material, the potting material being thermally coupled to the cover (110) of the main body (11).

9. Elevated airfield lighting device (10, 30) of any one preceding claim, wherein the main body (11, 31) has an outer surface being formed by a cover (110) at least in part made of an electrically conductive material so arranged as to shield electromagnetic radiation generated by the electronic circuit when in use.

10. Elevated airfield lighting device of any one preceding claim, wherein the light unit comprises at least one optical beam shaping element arranged in an optical path of the LED enabling to achieve a predetermined light intensity distribution.

11. Elevated airfield lighting device (30) of any one preceding claim, comprising means (36, 37) to adjust the position of the light unit (32) relative to the main body (31), so that at least the azimuth angle can be adjusted.

12. Elevated airfield lighting device of claim 11, wherein the main body (31) has an outer surface (315) which is curved in azimuth direction where the light unit (32) is attached to the main body (31).

13. Elevated airfield lighting device of any one preceding claim, wherein the main body comprises reference marks (513, 514) configured to engage with an alignment tool (52) for aligning the lighting device to an external reference, such that when the alignment tool is adjusted, the main body is adjusted in the same amount.

14. Elevated airfield lighting device of any one preceding claim, wherein the electrical connection between the main body and the support is provided by a connector plug and socket, and wherein the main body comprises releasable means for mechanically connecting the main body to the support.

15. Elevated airfield lighting device (10) of any one preceding claim, comprising at least two light units (12, 13) arranged at opposite sides of the main body (11).

## Patentansprüche

1. Erhöhte Flugfeld-Beleuchtungsvorrichtung (10, 30), umfassend einen Hauptkörper (11, 31), an einem Träger (14) befestigbar, wodurch es ermöglicht wird, dass der Hauptkörper bei einer erhöhten Position vom Boden (15) fixiert wird, und mindestens eine Lichteinheit (12, 13, 32), umfassend mindestens eine LED (17), wobei der Hauptkörper (11) einen elektronischen Schaltkreis zum Bestromen und Antreiben der LED umschließt und eine erste Wärmesenke umfasst, mit dem elektronischen Schaltkreis thermisch gekoppelt, und wobei die Lichteinheit (12, 13, 32) eine zweite Wärmesenke (322, 422) zum Ableiten der von der LED erzeugten Wärme umfasst, wobei die Lichteinheit als ein vom Hauptkörper (11, 31) getrennter Körper gebildet und am Hauptkörper (11, 31) befestigbar ist,
**dadurch gekennzeichnet, dass**:
- die Lichteinheit (12, 13, 32) eine Vorderseite (122, 132), zum Aussenden von Licht aus der LED (17) angeordnet, und eine Hinterseite umfasst, eine hintere Oberfläche (120, 130) umfassend, an der die zweite Wärmesenke bereitgestellt ist, und
- wenn die Lichteinheit (12, 13, 32) am Hauptkörper befestigt ist, die hintere Oberfläche (120, 130) zwischen der Vorderseite (122, 132) und dem Hauptkörper (11, 31) angeordnet und ein Fluiddurchgang zwischen dem Hauptkörper (11, 31) und der Lichteinheit (12, 13, 32) gebildet ist, wo Umgebungsluft durchströmen kann, so dass die zweite Wärmesenke (322, 422) Wärme an die Umgebungsluft durch natürliche Konvektion ableiten kann.

2. Erhöhte Flugfeld-Beleuchtungsvorrichtung (10, 30) nach Anspruch 1, wobei die Lichteinheit (12, 13, 32) an einer äußeren Oberfläche des Hauptkörpers lösbar befestigbar ist.

3. Erhöhte Flugfeld-Beleuchtungsvorrichtung (10, 30) nach einem der vorstehenden Ansprüche, wobei der Hauptkörper (11, 31) eine äußere Abdeckung (110) umfasst, die Abdeckung (110) eine Oberseite (112) und mindestens eine Stirnseite (113, 114) umfassend und wobei die Lichteinheit (12, 13) an der Stirnseite (113, 114) befestigbar ist.

4. Erhöhte Flugfeld-Beleuchtungsvorrichtung (10, 30) nach einem der vorstehenden Ansprüche, wobei die zweite Wärmesenke (322, 422) derart angeordnet ist, dass sie zu der die Abstrahlung exponierten Fläche der Beleuchtungsvorrichtung nicht beiträgt.

5. Erhöhte Flugfeld-Beleuchtungsvorrichtung nach einem der vorstehenden Ansprüche, wobei die zweite Wärmesenke (322, 422) von der ersten Wärmesenke thermisch isoliert ist, wenn die Lichteinheit (12, 13, 32) am Hauptkörper (11, 31) befestigt ist.

6. Erhöhte Flugfeld-Beleuchtungsvorrichtung (30) nach einem der vorstehenden Ansprüche, wobei die zweite Wärmesenke (322, 422) Finnen (323, 423) und/oder Stifte zur Vergrößerung der Oberfläche für die Wärmeübertragung umfasst, die an der hinteren Oberfläche (120, 130) angeordnet ist.

7. Erhöhte Flugfeld-Beleuchtungsvorrichtung (10, 30) nach einem der vorstehenden Ansprüche, wobei der Hauptkörper (11, 31) eine äußere Oberfläche aufweist, von einer Abdeckung (110) gebildet, die mindestens teilweise aus einem thermisch leitfähigen Material hergestellt ist, um mindestens einen Teil der ersten Wärmesenke auszumachen.

8. Erhöhte Flugfeld-Beleuchtungsvorrichtung nach Anspruch 7, wobei der elektronische Schaltkreis in ein thermisch leitfähiges Vergussmaterial eingebettet ist, wobei das Vergussmaterial mit der Abdeckung (110) des Hauptkörpers (11) thermisch gekoppelt ist.

9. Erhöhte Flugfeld-Beleuchtungsvorrichtung (10, 30) nach einem der vorstehenden Ansprüche, wobei der Hauptkörper (11, 31) eine äußere Oberfläche aufweist, von einer Abdeckung (110) gebildet, die mindestens teilweise aus einem elektrisch leitfähigen Material hergestellt ist, die derart angeordnet ist, um beim Gebrauch die vom elektronischen Schaltkreis erzeugte elektromagnetische Strahlung abzuschirmen.

10. Erhöhte Flugfeld-Beleuchtungsvorrichtung nach einem der vorstehenden Ansprüche, wobei die Lichteinheit mindestens ein optisches Strahlformungselement umfasst, in einem optischen Weg der LED angeordnet, das es ermöglicht, eine vorbestimmte Lichtintensitätsverteilung zu erzielen.

11. Erhöhte Flugfeld-Beleuchtungsvorrichtung (30) nach einem der vorstehenden Ansprüche, umfassend Mittel (36, 37) zum Einstellen der Position der Lichteinheit (32) relativ zum Hauptkörper (31), so dass mindestens der Azimutwinkel eingestellt werden kann.

12. Erhöhte Flugfeld-Beleuchtungsvorrichtung nach Anspruch 11, wobei der Hauptkörper (31) eine äußere Oberfläche (315) aufweist, die in Azimutrichtung gekrümmt ist, wo die Lichteinheit (32) am Hauptkörper (31) befestigt ist.

13. Erhöhte Flugfeld-Beleuchtungsvorrichtung nach einem der vorstehenden Ansprüche, wobei der Hauptkörper Referenzmarken (513, 514) umfasst, zum Eingriff in ein Ausrichtungswerkzeug (52) konfiguriert, um die Beleuchtungsvorrichtung an einer externen Referenz auszurichten, so dass bei Einstellung des Ausrichtungswerkzeugs der Hauptkörper im gleichen Ausmaß eingestellt wird.

14. Erhöhte Flugfeld-Beleuchtungsvorrichtung nach einem der vorstehenden Ansprüche, wobei die elektrische Verbindung zwischen dem Hauptkörper und dem Träger mittels Anschlussstecker und Buchse bereitgestellt ist und wobei der Hauptkörper lösbare Mittel zum mechanischen Verbinden des Hauptkörpers mit dem Träger umfasst.

15. Erhöhte Flugfeld-Beleuchtungsvorrichtung (10) nach einem der vorstehenden Ansprüche, umfassend mindestens zwei Lichteinheiten (12, 13), an entgegengesetzten Seiten des Hauptkörpers (11) angeordnet.

## Revendications

1. Dispositif d'éclairage de terrain d'aviation en saillie (10, 30), comprenant un corps principal (11, 31) pouvant être fixé à un support (14) permettant au corps principal d'être fixé à une position en saillie par rapport au sol (15), et au moins une unité lumineuse (12, 13, 32) comprenant au moins une DEL (17), dans lequel le corps principal (11) renferme un circuit électronique pour alimenter et commander la DEL et comprend un premier dissipateur thermique couplé thermiquement au circuit électronique, et dans lequel l'unité lumineuse (12, 13, 32) comprend un deuxième dissipateur thermique (322, 422) pour dissiper la chaleur générée par la DEL, l'unité lumineuse étant formée en tant que corps séparé du corps principal (11, 31) et pouvant être fixée au corps principal (11, 31), **caractérisé en ce que** :
- l'unité lumineuse (12, 13, 32) comprend une partie avant (122, 132) agencée pour transmettre la lumière provenant de la DEL (17), et une partie arrière comprenant une surface arrière (120, 130) au niveau de laquelle le deuxième dissipateur thermique est disposé, et
- lorsque l'unité lumineuse (12, 13, 32) est fixée au corps principal, la surface arrière (120, 130) est interposée entre la partie avant (122, 132) et le corps principal (11, 31) et un passage pour fluide est formé entre le corps principal (11, 31) et l'unité lumineuse (12, 13, 32) où l'air ambiant peut passer de telle sorte que le deuxième dissipateur thermique (322, 422) peut dissiper la chaleur vers l'air ambiant par convection naturelle.

2. Dispositif d'éclairage de terrain d'aviation en saillie (10, 30) selon la revendication 1, dans lequel l'unité lumineuse (12, 13, 32) peut être fixée de façon amovible à une surface externe du corps principal.

3. Dispositif d'éclairage de terrain d'aviation en saillie (10, 30) selon l'une quelconque des revendications précédentes, dans lequel le corps principal (11, 31) comprend un couvercle externe (110), le couvercle (110) comprenant une face supérieure (112) et au moins une face avant (113, 114), et dans lequel l'unité lumineuse (12, 13) peut être fixée à la face avant (113, 114).

4. Dispositif d'éclairage de terrain d'aviation en saillie (10, 30) selon l'une quelconque des revendications précédentes, dans lequel le deuxième dissipateur thermique (322, 422) est agencé de telle sorte qu'il ne contribue pas à la zone du dispositif d'éclairage exposée au souffle des réacteurs.

5. Dispositif d'éclairage de terrain d'aviation en saillie selon l'une quelconque des revendications précédentes, dans lequel le deuxième dissipateur thermique (322, 422) est thermiquement isolé du premier dissipateur thermique lorsque l'unité lumineuse (12, 13, 32) est fixée au corps principal (11, 31).

6. Dispositif d'éclairage de terrain d'aviation en saillie (30) selon l'une quelconque des revendications précédentes, dans lequel le deuxième dissipateur thermique (322, 422) comprend des ailettes (323, 423) et/ou des broches pour augmenter la surface de transfert thermique disposées au niveau de la surface arrière (120, 130).

7. Dispositif d'éclairage de terrain d'aviation en saillie (10, 30) selon l'une quelconque des revendications précédentes, dans lequel le corps principal (11, 31) a une surface externe formée d'un couvercle (110) au moins en partie fait d'un matériau thermiquement conducteur afin de constituer au moins une partie du premier dissipateur thermique.

8. Dispositif d'éclairage de terrain d'aviation en saillie selon la revendication 7, dans lequel le circuit électronique est intégré dans un matériau d'enrobage thermiquement conducteur, le matériau d'enrobage étant thermiquement couplé au couvercle (110) du corps principal (11).

9. Dispositif d'éclairage de terrain d'aviation en saillie (10, 30) selon l'une quelconque des revendications précédentes, dans lequel le corps principal (11, 31) a une surface externe formée d'un couvercle (110) au moins en partie fait d'un matériau électriquement conducteur agencé afin de faire écran à un rayonnement électromagnétique généré par le circuit électronique lorsqu'il est en cours d'utilisation.

10. Dispositif d'éclairage de terrain d'aviation en saillie selon l'une quelconque des revendications précédentes, dans lequel l'unité lumineuse comprend au moins un élément de mise en forme de faisceau optique disposé dans un chemin optique de la DEL permettant d'obtenir une distribution d'intensité lumineuse prédéterminée.

11. Dispositif d'éclairage de terrain d'aviation en saillie (30) selon l'une quelconque des revendications précédentes, comprenant des moyens (36, 37) pour ajuster la position de l'unité lumineuse (32) par rapport au corps principal (31), de telle sorte qu'au moins l'angle d'azimut puisse être ajusté.

12. Dispositif d'éclairage de terrain d'aviation en saillie selon la revendication 11, dans lequel le corps principal (31) a une surface externe (315) qui est courbée dans une direction azimutale où l'unité lumineuse (32) est fixée au corps principal (31).

13. Dispositif d'éclairage de terrain d'aviation en saillie selon l'une quelconque des revendications précédentes, dans lequel le corps principal comprend des marques de référence (513, 514) configurées pour s'engager avec un outil d'alignement (52) pour aligner le dispositif d'éclairage sur une référence externe, de telle sorte que lorsque l'outil d'alignement est ajusté, le corps principal soit ajusté dans la même proportion.

14. Dispositif d'éclairage de terrain d'aviation en saillie selon l'une quelconque des revendications précédentes, dans lequel la connexion électrique entre le corps principal et le support est fournie par une fiche de connexion et une fiche femelle, et dans lequel le corps principal comprend des moyens amovibles pour connecter mécaniquement le corps principal au support.

15. Dispositif d'éclairage de terrain d'aviation en saillie (10) selon l'une quelconque des revendications précédentes, comprenant au moins deux unités lumineuses (12, 13) disposées à des côtés opposés du corps principal (11).
